# EUROPEAN PATENT APPLICATION

(11) **EP 4 614 671 A1**
(43) Date of publication of application: **10.09.2025**
(21) Application number: 25157484.4
(22) Date of filing: 12.02.2025
(51) Int. Cl.: H01M 10/48, H01M 50/264, H01M 10/04, H01M 10/42

(54) **SYSTEM AND METHOD FOR MONITORING BATTERY SWELLING**

(30) Priority: 08.03.2024 US 202418600183
(71) Applicant: Pipistrel D.O.O., 5270 Ajdovscina (SI)
(72) Inventor: VAN STEENIS, Tibor Kjell, SI 5270 Ajdovscina (SI)
(74) Representative: Barker Brettell LLP

(57) **Abstract**

A battery pack (10) includes a plurality of battery cells (100) stacked in a stacking direction (S) and forming a battery cell stack (105), a first end plate (110) arranged at a first end of the battery cell stack (105), a second end plate (120) arranged at a second end of the battery cell stack (105), connection elements (130) connecting the first and second end plates (110, 120), and a sensor (150) arranged at the battery pack (10), the sensor (150) configured to measure an extension or a shortening of a distance between the first and second end plates (110, 120). A method for measuring a battery cell swelling of a battery pack and a battery are also disclosed.

## Description

### TECHNICAL FIELD

The present invention relates generally to a system and method for monitoring battery swelling, and, in particular embodiments, to a system and method for controlling battery swelling.

### BACKGROUND

Batteries are conventionally placed or mounted in vehicles such as cars and trucks but also in aircrafts. The number of batteries used in these vehicles may have increased over recent years. Accordingly, the industry is constantly looking to improve existing types of batteries and are in search of newer types of batteries. However, some of the more powerful batteries available or under development have a tendency to swell over time due to ageing.

### SUMMARY

Various embodiments provide a battery pack that includes a plurality of battery cells stacked in a stacking direction and forming a battery cell stack, a first end plate arranged at a first end of the battery cell stack, a second end plate arranged at a second end of the battery cell stack, connection elements connecting the first and second end plates, and a sensor arranged at the battery pack, the sensor configured to measure an extension or a shortening of a distance between the first and second end plates.

Various other embodiments provide a method for measuring a battery cell swelling of a battery pack, wherein the battery pack comprises a plurality of battery cells stacked in a stacking direction and forming a battery stack, a first end plate arranged at a first end of the battery pack and a second end plate arranged at a second end of the battery pack, connection elements connecting the first and second end plates, sensors arranged at the connection elements and a controller, and wherein the method comprises measuring, by the sensors, a value representative of an extension or a shortening of a distance of the first and second end plates.

Yet other embodiments provide a battery that comprises a plurality of battery cells stacked in a stacking direction and forming a battery cell stack, a first end plate arranged at a first end of the battery cell stack, a second end plate arranged at a second end of the battery cell stack, a plurality of tension rods connecting the first and second end plates and a plurality of sensors, each one sensor assigned to one respective tension rod and configured to measure an extension or a shortening of a distance between the first and second end plates, the extension or shortening representing a pressure between the first and second end plates, and an adjustment system comprising a motor and an adjustment device configured to adjust the distance between the first and second end plates when the measured extension or shortening exceed a threshold value.

### BRIEF DESCRIPTION OF THE DRAWINGS

For a more complete understanding of the present invention, and the advantages thereof, reference is now made to the following descriptions taken in conjunction with the accompanying drawings, in which:
**Figure 1** shows a battery pack in a perspective view according to embodiments;
**Figure 2** shows a battery pack in a side view according to embodiments;
**Figure 3A-3B** show details of a battery pack with an automatic compression adjustment system;
**Figures 4A-4C** show embodiments of a strain gauge arranged at a tension rod; and
**Figure 5** shows an embodiment method for measuring a distance between a first end plate and a second end plate of a battery stack.

### DETAILED DESCRIPTION OF ILLUSTRATIVE EMBODIMENTS

Embodiments provide a method for measuring battery cell swelling and in particular battery cell swelling with respect to state of health (SoH) and/or state of power (SoP). Further embodiments provide a method for monitoring battery cell swelling and a method for adjusting the pressure in the cells (via adjusting end plates) in order to provide constant cell surface pressures. This is advantageous because these methods provide optimal (battery) cell performance and increased battery life.

Various other embodiments provide a battery pack or battery system related to the above the above cited embodiments. Further advantages are that such a battery pack or system is able to measure swelling and cell performance. Yet other advantages are that the disclosed battery packs provide a lightweight solution compared to other comparable battery packs.

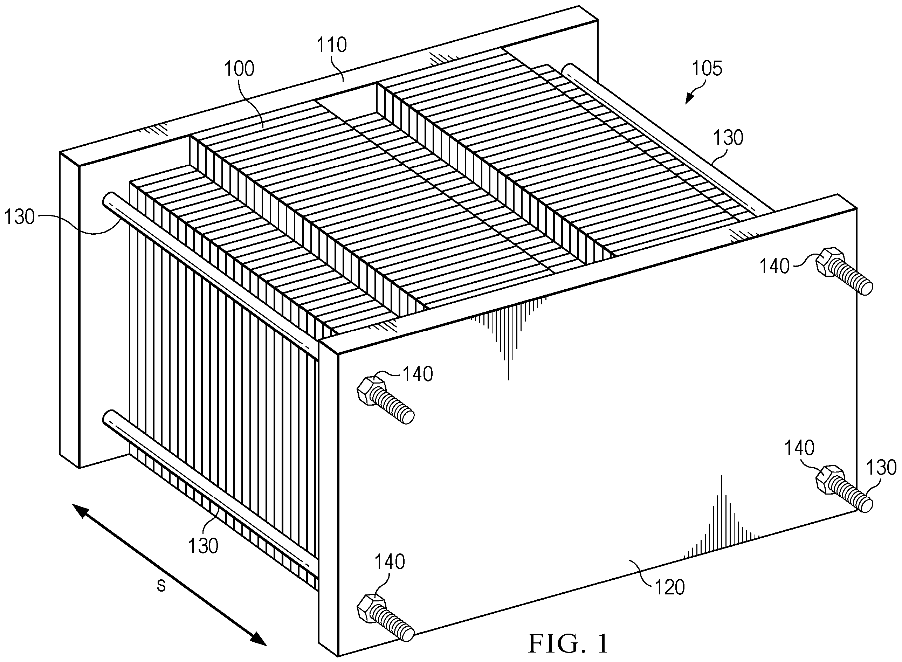

Figure 1 shows a battery pack 10 according to an embodiment. The battery pack 10 comprises a plurality of battery cells 100 stacked in a stacking direction S forming a battery stack 105. A first end plate 110 is located at one end of the battery stack 105 and a second end plate 120 is located at the other end of the battery stack 105. The battery pack 10 may comprise an insulation wrapped around the battery cells 100 (not shown) or the battery cells 100 are individually insulated by an insulation. In some embodiments a casing or housing (not shown) may at least partially surround the battery pack 10, the battery cells 100 or the battery cells 100 and the insulation so that, e.g., the battery cells are not visible from the outside. The battery cells 100 are electrically connected to each other and the battery pack 10 comprises a plus pole and a minus pole. The poles may be arranged on the first and second end plates 110, 120 or on the housing. For example, the plus pole may be arranged on the first end plate 110 and the minus pole may be arranged on the second end plate 120, or vice versa. The end plates 110, 120 may be made of an honeycomb aluminum composite.

The battery cells 100 may be solid state cells or cells with an anode made from silicon or a graphene-silicon blend . The battery cells 100 may all have the same width in a stacking direction S and may be placed in equal equidistant intervals along the stacking direction S. The surfaces of the battery cells 100 may be arranged directly adjacent to and in contact with each other. Further, a surface of a respective end cell on each side of the battery cell stack 105 may be arranged directly adjacent to and in contact with an inner surface of a respective end plate 110, 120.

Alternatively, coolant plates (using coolant liquid) or pads such as foams or compression pads are located between neighboring battery cells 100 and/or inner surfaces of the respective end plates 110, 120. The foam/compression pads and/or cooling plates may have good thermal conductivity to provide good thermal management. The foam/compression pads may be insulating, e.g., in case tab cooling is applied, in order to limit thermal runaway propagation.

The battery cells 100 may be series connected, i.e., the plus node of one cell is connected to the minus node of the next cell . Alternatively, the battery cells 100 may be connected in parallel. The cells 100 may have the nodes on the top or bottom surfaces (facing in stacking direction S) or on the side surfaces (facing orthogonal to the stacking direction S). Some cell types 100 may require constant pressure (such as certain types of solid state cells), while other cell types may tolerate some pressure change.

The first and second end plates 110 and 120 (sometimes also called pressure plates) are connected to each other via connection elements or means for connecting the end plates 130. The connection elements 130 may be connection rods, bars, struts or bolts or tension rods, bars, struts or bolts. For example, the connection elements 130 are threaded or smooth (without a thread) tension rods. The two end plates 110, 120 may be connected by a plurality of connection elements 130 such as 2, 3, 4, 5, 6, 8 or more connection elements 130. The connection elements can comprise aluminum, steel, or carbon fiber rods. The rods should have a tensile strength in the range of between 100 MPa to 700 MPa, 150 MPa to 620MPa, or 250 MPa to 500 MPa.

The connection elements 130 may permanently fixed to the end plates 110, 120. For example, they might be integrated with, combined with or soldered to both of the end plates 110, 120. Alternatively, the connection elements 130 may be permanently fixed to one of the end plates 110, 120 and may be removably fixed to the other one of the end plates 110, 120. Yet, in another alternative embodiment, the connection elements 130 may be removably fixed to both end plates 110, 120. For example, the first and second end plates 110, 120 may have holes or openings though which the connection elements 130 are guidable or guided. In an embodiment, only one of the first and second end plates 110, 120 has holes and the other does not. The connection elements 130 may have a thread or a hole at at least one end.

The connection elements 130 may extend beyond the first and/or second end plate 110, 120 on the outer surfaces opposite to the inner surfaces where the battery cells 100 are located. The connection elements 130 may be adjustably fastened, by a fastener 140, to the first and/or second end plates 110, 120 for tensioning them. The fasteners 140 may be nuts, clips, brackets, etc.

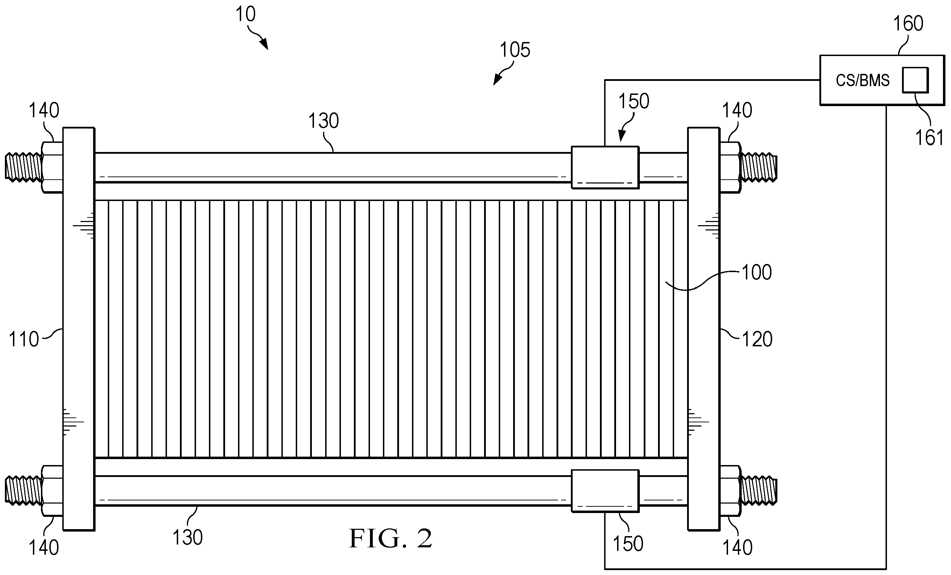

Figure 2 shows a side view of a battery pack 10 according to an embodiment without an automatic compression adjustment so that no dynamic adjustment of the end plates 110, 120 is possible. The battery pack 10 may be similar to the battery pack of Figure 1.

The first and second end plates 110, 120 hold the battery cell stack 105. Four tension rods 130 (or bolts or bars) extend between and beyond the end plates 110, 120. Fasteners 140 fix the end plates 110, 120 to each other via the tension rods 130. The distance of the end plates 110, 120 may be adjustable (although not automatically) relative to each other via the fasteners 140.

Moreover, the battery pack 10 shows sensors 150 arranged at/on/in the tension rods 130. The battery pack 10 may comprise one sensor 150 or a plurality of sensors 150. For example, the battery pack 10 has four tension rods 130 each having one sensor 150 assigned, e.g., each rod has a sensor 150 attached. In an alternative embodiment only some of the tension rods 130 have an assigned sensor so that the battery pack 10 comprises only one sensor 150 or two sensors 150.

The sensor 150 is configured to measure a pressure between the end plates 110 that is a result of the tension in the tension rods 130. A base pressure may be established by tightening the fasteners 140 after the battery pack 105 is assembled. The pressure may further be generated or increased by swelling of the battery cells 100 and in particular by swelling of the surfaces of the battery cells 100 facing each other. The battery cells 100 may permanently swell according to ageing. Battery cells 100, particularly lithium-ion batteries and solid state batteries, can swell under certain conditions due to a process called outgassing. This happens when the battery cell 100 is overcharged, discharged too quickly, exposed to high temperatures, physically damaged or just became less efficient (over time). For example, when the battery cell 100 is overcharged, the excessive current leads to a buildup of heat, which can cause the electrolyte in the battery to break down and produce gas. The produced gas exercises pressure on (all) battery cell walls (and in particular the top and bottom surfaces of the cells 100 in stacking direction S). The generated pressure on the top and bottom surfaces of battery cells 100 in turn generates tension on the tension rods 130. For example, a minimum pressure could be 200 kPa, 300 kPa or 400 kPa. The threshold pressure could be 1MPa, 1.5 MPa, 2 MPa, or even 3 MPa.

The sensor 150 may be arranged on/in/at or between tension rod(s) 130. Alternatively, the sensor 150 may be arranged on at least one of the battery cells. The sensor 150 may be a strain gauge. The strain gauge may measure the pressure between the end plates 110, 120 by measuring the strain of the connection elements (tension rods). The strain gauges may comprise a wire pattern, a capacitor, a ring oscillator, an inductive element, a membrane, a crystal, or a strain gauge.

The sensor(s) 150 may be connected to a control system (CS) or a battery management system (BMS) 160 comprising a processor 161 such as a microprocessor. The control system (CS) is configured for pressure control and may be independent and distinct of the BMS. For example, each battery pack can have an assigned CS 160 but the entire battery comprising several battery packs may have only one BMS 160.

The CS/BMS 160 may be configured to calculate the compression force between the plates 110, 120. In order to calculate the compression force three values need to be known: 1) an extension or elongation (along direction L) of a respective tension rod 130, 2) Youngs Modulus of the respective tension rod 130 and 3) the cross sectional area of the respective tension rod 130 at the location of the sensor 150. Alternatively, 3) can be replaced by a ratio between the (top/bottom) surfaces of a cell and the cross sectional area of the tension rod 130. The first item is measured by the sensor 150 and the two last items are known so that the sensor 150 or the CS/BMS 160 can calculate the strain, pressure and/or the compression force.

Accordingly, each sensor 150 is configured to measure the elongation or extension of the tension rod 130 (or an equivalent of that value) and to report this value to processor 161 of the CS/BMS 160 and the processor 161 is configured to calculate a pressure (value) and/or a compression force (value). In various embodiments the sensor has the capability to calculate the pressure and/or the compression force.

The processor 161 is further configured to compare the measured/calculated pressure value or compression force value to a threshold pressure value or compression force value. If the measured value exceeds/passes the threshold value (above/below) the processor 161 of CS/BMS 160 is configured to issue an indication that the measured value has passed the threshold value. The indication may be an illumination, a sound signal or other notification so that a user is able to know that some action is required.

The battery pack 10 of the embodiment of Figure 2 may not have the capability for adjusting the end plates 110, 120 because they are arranged in a permanently fixed distance. Accordingly, this arrangement is suitable for certain types of battery cells 110 that tolerate some degree of pressure. The sensors 150 in this arrangement may indicate when the battery pack 10 reaches its end of life and needs to be replaced with a new one.

Alternatively, the distance of the end plates 110, 120 of the battery pack 10 in Figure 2 may be manually adjustable. This arrangement may be suitable for battery cells 110 that do not need frequent adjustment. The sensors 150 in this arrangement may indicate when the pressure passes the threshold value and a user may loosen the fasteners 140, e.g., at one of the end plates 110, 120, in order to mitigate the pressure and in order to move the pressure value away from the threshold value back in the allowed pressure region.

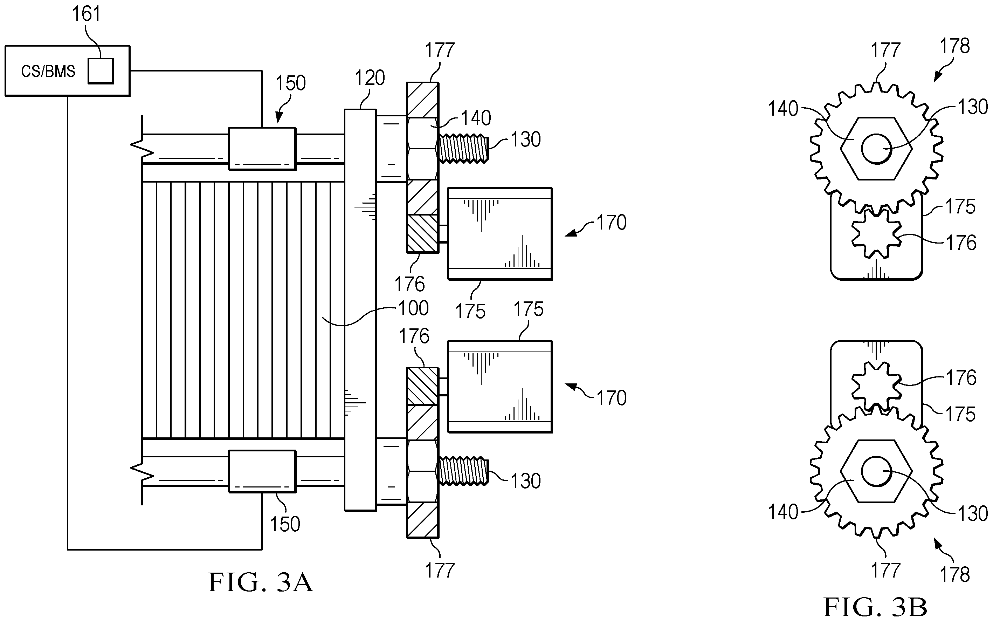

Figures 3A-3B show side views of an end portion of a battery pack 10 according to an embodiment with automatic compression adjustment so that a dynamic adjustment of the end plates 110, 120 is possible. The battery pack 10 may be similar to the battery pack of Figures 1 and 2.

As in Figure 2, each sensor 150 is configured to measure an elongation of the tension rod 130 or a pressure between the end plates 110, 120 by an increase in battery cell 110 size due to swelling. Each sensor is configured to report the measured value to the processor 161 of the CS/BMS 160 and the processor 161 is configured to compare the measured value to a threshold value. If the measured value exceeds/passes the threshold value, the processor 161 is configured to notify an adjustment system 170 so that the first plate 110 and/or second plate 120 need(s) to be adjusted in order to relieve, reduce or alleviate the pressure between the first and second plates 110, 120 and the adjacent surfaces of battery cells 100.

The adjustment system 170 may comprise a motor 175 and an adjustment device or means for translating the adjustment action 178 of the motor 175. The motor 175 may be a stepper motor or a continuous servo motor. The adjustment device 178 may be a series of gears that moves (e.g., turns), a fastener 140 (e.g., a nut) on a tension rod 130 in order to adjust or loosen (one of) the plates 110, 120. Each tension rod 130/sensor 150 may have its own motor 175 and its own adjustment device 178 assigned. In an embodiment, only one motor 150 and a plurality of adjustment devices 178 are employed. In a further embodiment, only one motor and one adjustment device is employed in order to operate all fasteners. In the latter cases, the motor 175 may have a coupling or clutch configured to engage all or some (e.g., a single) adjustment device(s) 178.

In operation, each sensor 150 measures the elongation of a respective tension bar or the pressure between the first and second plates 110, 120. If it detects a strain (above a certain threshold value) it communicates the detection to the processor 161 of the CS/BMS 160. The processor 161 in turn notifies the adjustment system 170 and in particular its motor 175. The processor 161 indicates how much adjustment is needed. The motor 175 operates the adjustment device 178, which in turn moves the fastener 140. For example, the adjustment device 178 is configured to loosen the fastener 140 (e.g., nut) so that the second end plate 120 is able to move away from the first end plate 110 and thereby mitigates the pressure in battery cells 100 and on the surfaces of the battery cells 100.

In one embodiment, the adjustment device 178 comprises two gears, a first (smaller) gear 176, which is fixed directly to or on a shaft or spindle of the motor 175, and a second (larger) gear 177, which is fixed to the faster 140 (e.g., nut) so that the first gear 176 is configured to directly move or turn the second gear 177 (via, e.g., a step down ratio). The shaft or spindle of the motor 175 may be arranged parallel to a direction of the connection element 130 (e.g., tension rod).

Alternatively, the step down ratio can also be achieved with a second (additional) shaft or spindle (on which gears are arranged) between the motor shaft or spindle and the fastener 140 of the connection element 130 in order to provide the step down ratio. In this embodiment the first gear may directly connect to and move a third gear of the additional shaft or spindle and a fourth gear of the additional shaft or spindle may directly connect or move the second gear.

The battery pack 10 may further comprise a bearing 190 arranged at the connection element 130 between the fastener 140 and the second end plate 120. The bearing 190 may be an axial bearing or a thrust washer.

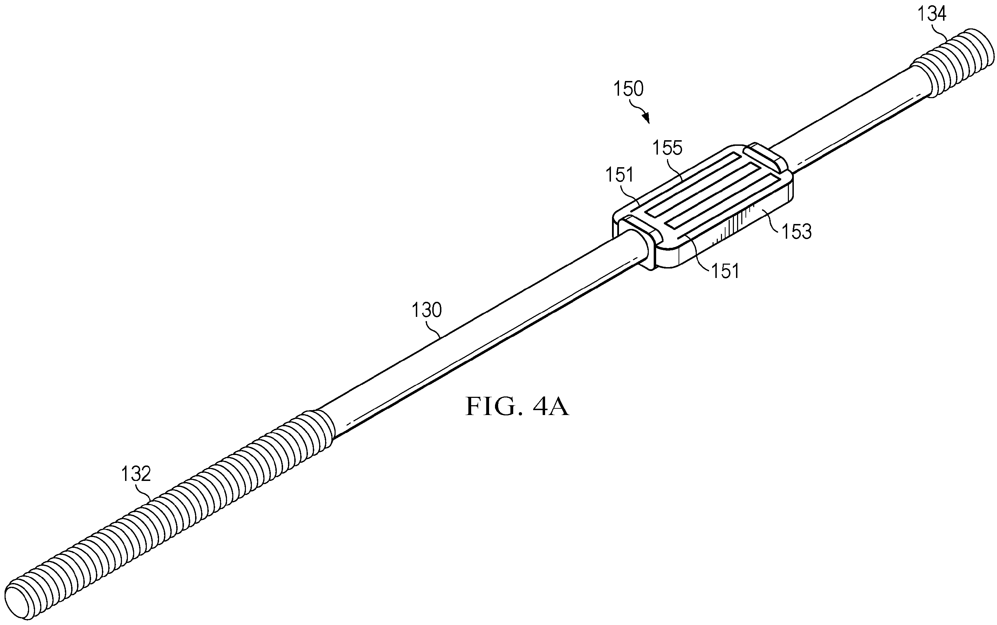

Figure 4A shows an embodiment of the sensor 150 arranged at a connection element 130 such as a threaded tension rod. The sensor 150 may be a discrete element such as a load cell, which is permanently fixed to, removably fastened to, or integrated in or on a surface of the connection element 130. For example, the sensor 150 may surround a portion of the surface area of the connection element 130. Alternatively, the sensor 150 may be a foil glued to a surface of the connection element 130. **In** various embodiments the sensor 150 is or comprises a strain gauge 155 having a measurement pattern 153. For example, the sensor 150 is a strain gauge 155 with embedded measurement pattern 153 (e.g., embedded in an isolation foil). The measurement pattern 153 may comprise an electrically conductive path and terminals 151. The electrically conductive path between the terminals 151 may be a wire or filament. The sensor 150 may further comprise a power supply configured to supply power to the terminals 151. The power supply may additionally comprise a voltmeter and/or an amperemeter. The voltmeter and/or amperemeter measures the electric potential or the electric current between the terminals 151. The CS/BMS 160 may provide the power to the sensor 150 in order to perform the measurement(s). Alternatively, the power is provided from some other power sources and the controller 161 of the CS/BMS causes the other power source to power the sensor 150.

The sensor 150 sends the electrical measurement(s) back to the CS/BMS 160. The processor 161 of the CS/BMS 160 calculates a resistance value and compares the measured resistance value with a (predetermined) threshold resistance value or only compares the current value with a predetermined current value. Alternatively, the sensor 150 calculates the resistance value and sends it over to the CS/BMS 160 for the comparison. In another embodiment the sensor 150 calculates the resistance value and comparison and just sent over the final result for the CS/BMS 160 in order to take action.

For example, in operation, when connection element 130 is extended it narrows a width of the wire or filament 153 and increases a length of the wire or filament 153. When electrical power or electric current is applied (via the terminals) a measured resistance/current (as equivalent of the extension) between the terminals 151 is increased relative to an original resistance/current between these terminals. As mentioned above, the strain can be measured via other options, e.g., a capacitor or an inductive element.

The connection element 130 (e.g., rod) may have threads at both ends of the element 130. One thread 132 may be longer than the other thread 134, e.g., twice as long or three times as long. Alternatively, both ends may comprise threads with the same thread lengths.

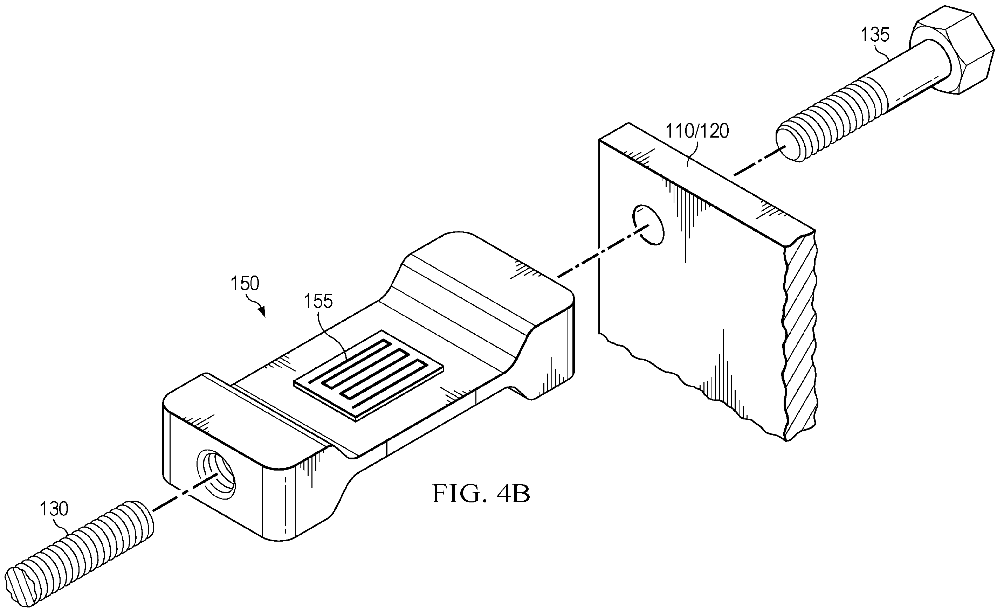

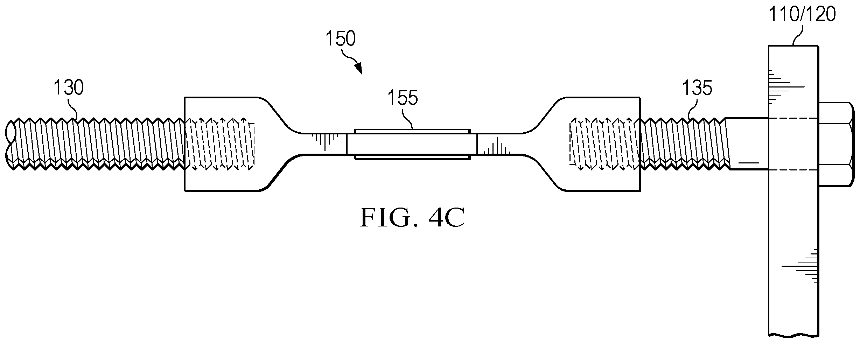

Figures 4B-4C show an alternative embodiment to the embodiment of Figure 4A. Figure 4B shows an exploded view of the embodiment and Figure 4C an assembled one. Here, the sensor 150 is not arranged at or on a surface of the connection element 130 but connected between two (same) connection elements (threaded rods) or a connection element 130 and a threaded bolt 135 or a bolt integrated in one of the end plates, etc. The sensor 150 may comprise at least one strain gauge 155 arranged on a surface or integrated in an aluminum sensor 150.

In various embodiments the sensor 150 is not arranged on the connection elements but on the battery cell or a plurality of battery cells.

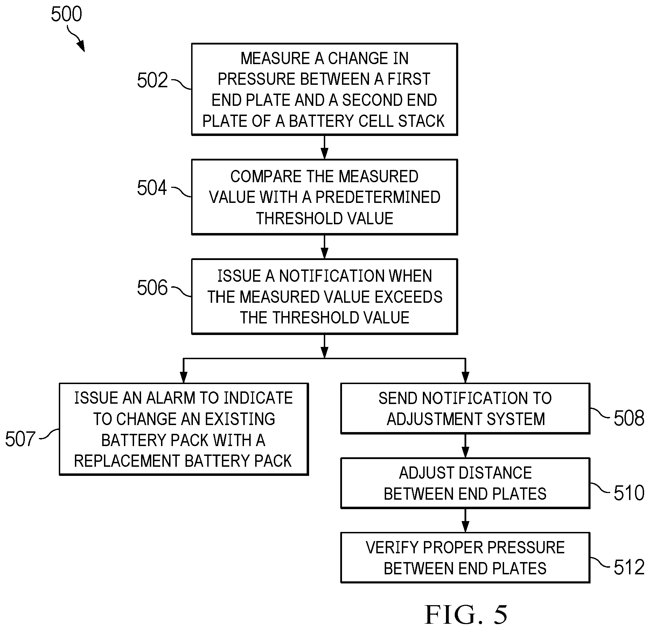

Figure 5 shows a method 500 for measuring a pressure between a first end plate and a second end plate of a battery stack in a battery pack, wherein the battery stack comprises a plurality of cells stacked in a stacking direction. The battery pack further comprises connection elements such as (tension) rods or bars connecting the first and second end plates. The battery pack comprises at least one sensor such as a strain gauge for measuring an elongation of the assigned connection elements (e.g., as an indication of electrical current) and/or a pressure of the end plates. A sensor may be arranged at or between connection elements. The battery pack may have several connection elements such as four connection elements and several sensors, each one sensor assigned or arranged at a respective one of the connection elements.

In a first step, at 502, the sensor measures a change in elongation of at least one connection element and/or a pressure between the first and second end plates. A change in current, resistance, capacity, inductivity is indicative of an elongation change or a pressure change. For example, a change in electric current can be indicative of a pressure change. In various embodiment, in order to measure the change in pressure between the first and second end plates, the sensor may measure the electric current (value) and/or based on this a resistance (value) of a wire.

In a second step, at 504, the sensor or a control system or a battery management system compares the measured or calculated pressure value with a predetermined pressure threshold value. The predetermined threshold value is based on the base (original) pressure existing between the first and second end plates after the battery pack is assembled and has passed quality check. The predetermined threshold also takes into account an acceptable margin or tolerance in which no action is required, i.e., how much the pressure can increase without causing a concern for the battery pack after assembling or during the life of the battery pack.

If the measured value exceeds the (upper or lower) threshold value the controller of the battery management system, at 506, will issue a notification. The notification may be issued as an alarm (e.g., an illumination of a light at the battery pack), at 507, so that a user is aware that the current battery pack must be changed with a replacement (e.g., new) battery pack or that the fasteners at the end of the connection elements at an end plate need to be manually loosened.

Alternatively, the notification may be sent as an electrical signal, at 508, to an adjustment system arranged at the battery pack. The electrical signal may trigger or start, at 510, a motor of the adjustment system in order to perform an adjustment action (loosen a fastener at an end plate at an end of the connection element). The motor may adjust the distance (e.g., increase) between the first and second end plates so that the pressure on the battery cells is mitigated. This may be done by the adjustment device of the adjustment system. The adjustment device may comprises gears operating (e.g., unscrewing) a nut.

After 510, at 512, the CS/BMS may control the pressure via the sensors again in order to verify that the proper pressure values are achieved. The motor may be a servo motor being able to adjust the pressure continuously or a stepper motor that is able to adjust the pressure in discrete steps. If the proper pressure values are not achieved, the method repeats the method 600. In various embodiments, the CS/BMS of the battery stack controls the pressure as much as at least once per minute, at least once per hour, at least once per day, or at least once per week.

A variation of this method could also be used when the battery is tested after assembling during manufacturing. If every connection element (tension rod or bar) has a sensor, each sensor may provide pressure information. For a properly manufactured battery pack all sensors should indicate the same pressure (and in particular should not pass the threshold value). If one or more sensors show an error (too high or too low) the distance between the end plates may be adjusted via manual (or automatic) adjustment of the fasteners so that the pressure between the end plates is moved to a desired value.

Moreover, during operation, all sensors should report about the same pressure. If only one sensor of the sensors indicates a violation of the threshold value the CS/BMS should indicate a failure or issue a warning. Similarly, if the sensors (e.g., one sensor compared to the other sensors) show a substantially large difference in pressure (e.g., 30% or 40%) without violating the threshold value, the CS/BMS should also indicate a failure or issue a warning.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A battery pack comprising:
a plurality of battery cells stacked in a stacking direction and forming a battery cell stack;
a first end plate arranged at a first end of the battery cell stack;
a second end plate arranged at a second end of the battery cell stack;
connection elements connecting the first and second end plates; and
a sensor arranged at the battery pack, the sensor configured to measure an extension or a shortening of a distance between the first and second end plates.

2. The battery pack of claim 1, wherein the sensor is a strain gauge configured to measure strain of a respective connection element.

3. The battery pack of claim 1 or claim 2, wherein the sensor comprises a plurality of sensors, and wherein each sensor is assigned to or arranged at a respective connection element,
and optionally or preferably wherein the connection elements are exactly four connection elements.

4. The battery pack of claim 1, or any other preceding claim, wherein any one or more of:
a) the connection elements are tension rods, and wherein each sensor surrounds a portion of a surface area of a respective tension rod;
b) the connection elements are tension rods, and wherein each sensor is arranged between two tension rods; and/or
c) the connection elements are tension rods and bolts, and wherein each sensor is arranged between a tension rod and a bolt.

5. The battery pack of claim 1, or any other preceding claim, wherein the sensor is configured to:
measure the extension or the shortening;
calculate strain based on the extension or the shortening;
compare the calculated value with a threshold value; and
provide a notification when the calculated value exceeds the threshold value.

6. The battery pack of claim 1, or any other preceding claim, further comprising a measuring system or a battery management system configured to:
receive a strain measurement from the sensor;
compare a measured value with a threshold value; and
provide a notification when the measured value exceeds the threshold value.

7. The battery pack of claim 1, or any other preceding claim, further comprising a measuring system or a battery management system configured to:
provide power to the sensor;
receive a measured current value or a measured resistance value;
compare the measured value with a threshold value; and
provide a notification when the measured value exceeds the threshold value.

8. The battery pack of claim 1, or any other preceding claim, further comprising an adjustment system, wherein the adjustment system is configured to:
receive a notification that a measured value related to pressure between the first and second end plates exceeded a threshold value; and
adjust the distance between the first and second end plates.

9. A method for measuring a battery cell swelling of a battery pack, wherein the battery pack comprises a plurality of battery cells stacked in a stacking direction and forming a battery stack, a first end plate arranged at a first end of the battery pack and a second end plate arranged at a second end of the battery pack, connection elements connecting the first and second end plates, sensors arranged at the connection elements and a controller, the method comprising:
measuring, by the sensors, a value representative of an extension or a shortening of a distance of the first and second end plates.

10. The method of claim 9, wherein measuring the extension or the shortening comprises measuring a current value or a resistance value at the sensors.

11. The method of claim 9 or claim 10, further comprising:
comparing the measured value with a threshold value; and
issuing a notification when the measured value exceeds the threshold value, and optionally or preferably the method further comprising one or both of:
a) automatically adjusting the distance between the first and second end plates after the notification is issued; and
b) replacing the battery pack with a new battery pack at a vehicle when the notification is issued.

12. A battery comprising:
a plurality of battery cells stacked in a stacking direction and forming a battery cell stack;
a first end plate arranged at a first end of the battery cell stack;
a second end plate arranged at a second end of the battery cell stack;
a plurality of tension rods connecting the first and second end plates; and
a plurality of sensors, each one sensor assigned to one respective tension rod and configured to measure an extension or a shortening of a distance of the tension rods fastened to the first and second end plates, the extension or shortening representing a pressure between the first and second end plates; and
an adjustment system comprising a motor and an adjustment device configured to adjust the distance between the first and second end plates when the measured extension or shortening of the tension rods exceed a threshold value.

13. The battery of claim 12, wherein the tension rods are permanently fixed to the first end plate and releasably fixed to the second end plate.

14. The battery of claim 12 or claim 13, wherein the adjustment device comprises a plurality of gears between the motor and the tension rods, wherein a first gear of the plurality of gears sits on a spindle connected to the motor, wherein a second gear of the plurality of gears sits on a respective tension, wherein the first gear is configured to move the second gear, and wherein the second gear is configured to move a nut on the respective tension rod in order to move the second end plate away from the first end plate.

15. The battery of claim 12 or claim 13 or claim 14, further comprising a controller configured to receive the measurement and to send a notification to the adjustment system when the measured extension or shortening exceeds the threshold value.
